(19) Europäisches Patentamt / European Patent Office / Office européen des brevets

(11) **EP 3 472 898 B1**

(12) **FASCICULE DE BREVET EUROPEEN**

(45) Date de publication et mention de la délivrance du brevet:
**25.11.2020 Bulletin 2020/48**

(21) Numéro de dépôt: **17740439.9**

(22) Date de dépôt: **19.06.2017**

(51) Int Cl.:
*H01Q 9/40* *(2006.01)*    *H01Q 15/00* *(2006.01)*
*H01Q 5/50* *(2015.01)*

(86) Numéro de dépôt international:
**PCT/FR2017/051598**

(87) Numéro de publication internationale:
**WO 2017/220905 (28.12.2017 Gazette 2017/52)**

(54) **PROCÉDÉ D'AMÉLIORATION DE L'EFFICACITÉ D'UNE ANTENNE ÉLECTRIQUEMENT PETITE**

VERFAHREN ZUR VERBESSERUNG DER EFFIZIENZ EINER ELEKTRISCH KLEINEN ANTENNE

METHOD FOR IMPROVING THE EFFICIENCY OF AN ELECTRICALLY SMALL ANTENNA

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **20.06.2016 FR 1655690**

(43) Date de publication de la demande:
**24.04.2019 Bulletin 2019/17**

(73) Titulaire: **Universite Gustave Eiffel**
**77454 Marne-la-Vallée Cedex 2 (FR)**

(72) Inventeurs:
• **SEETHARAMDOO, Divitha**
  **59700 MARCQ EN BAROEUL (FR)**
• **RABAH, Mhamad-Hassanein**
  **59650 VILLENEUVE D'ASCQ (FR)**
• **SROUR, Hussein**
  **59650 VILLENEUVE D'ASCQ (FR)**
• **BERBINEAU, Marion**
  **59650 VILLENEUVE D'ASCQ (FR)**

(74) Mandataire: **Cabinet Beau de Loménie**
  **158, rue de l'Université**
  **75340 Paris Cedex 07 (FR)**

(56) Documents cités:
**US-A1- 2009 140 946**

• **RABAH M HASSANEIN ET AL: "Analysis of Miniature Metamaterial and Magnetodielectric Arbitrary-Shaped Patch Antennas Using Characteristic Modes: Evaluation of the $Q$ Factor", IEEE TRANSACTIONS ON ANTENNAS AND PROPAGATION, IEEE SERVICE CENTER, PISCATAWAY, NJ, US, vol. 64, no. 7, 23 mai 2016 (2016-05-23), pages 2719-2731, XP011616145, ISSN: 0018-926X, DOI: 10.1109/TAP.2016.2571723 [extrait le 2016-07-04]**
• **M. HASSANEIN RABAH ET AL: "Novel Miniature Extremely-Wide-Band Antenna With Stable Radiation Pattern for Spectrum Sensing Applications", IEEE ANTENNAS AND WIRELESS PROPAGATION LETTERS, vol. 14, 23 mars 2015 (2015-03-23), pages 1634-1637, XP055360894, US ISSN: 1536-1225, DOI: 10.1109/LAWP.2015.2415491**
• **RABAH M HASSANEIN ET AL: "New Metrics for Artificial Magnetism From Metal-Dielectric Metamaterial Based on the Theory of Characteristic Modes", IEEE ANTENNAS AND WIRELESS PROPAGATION LETTERS, vol. 15, 2 juillet 2015 (2015-07-02), pages 460-463, XP011608803, ISSN: 1536-1225, DOI: 10.1109/LAWP.2015.2452269 [extrait le 2016-02-29] cité dans la demande**

**Description**

Arrière-plan de l'invention

L'invention concerne les antennes électriquement petites et plus particulièrement un procédé d'amélioration de l'efficacité d'une antenne électriquement petite. L'article intitulé "Analysis of Miniature Metamaterial and Magnetodielectric Arbitrary-Shaped Path Antennas Using Characteristic Modes: Evaluation of the Q factor"par Rabah, M.H. divulgue un procédé d'évaluation du facteur de qualité d'une antenne électriquement petite.

D'après la relation de H.A. Wheeler, une antenne est dite électriquement petite lorsque sa dimension maximale est inférieure à $\lambda/\pi$, $\lambda$ étant la longueur d'onde à laquelle l'antenne fonctionne, c'est-à-dire lorsque son volume est inférieur à une sphère de rayon $\lambda/2\pi$ également connue sous la dénomination de « radiansphere » en anglais. Cette définition est équivalente à dire qu'une antenne est électriquement petite si elle satisfait à la condition $ka<1$, où $k$ est le nombre d'onde $2\pi/\lambda$, et $a$ le rayon de la sphère minimale qui englobe l'antenne, également connu sous la dénomination de « sphère de Chu ».

La « radiansphere » correspond à la distance de transition entre le champ proche où l'énergie électromagnétique est stockée dans l'antenne et le champ lointain où celle-ci est propagée.

Cette réduction de taille des antennes par rapport à la longueur d'onde électrique limite les performances radioélectriques des antennes.

Les performances d'une antenne électriquement petite (AEP) sont caractérisées par la taille électrique $ka$, le facteur de qualité $Q$ (ou bande passante), et l'efficacité rayonnée $\eta$ qui est définie par le rapport entre la puissance rayonnée et celle acceptée par l'antenne.

Les pertes au niveau de l'antenne sont modélisées par une résistance série de pertes $R_{loss}$. Avec $R_{rad}$ la résistance de rayonnement et $R_A$ la résistance totale d'entrée $R_{rad}+R_{loss}$, l'efficacité rayonnée $\eta$ peut s'écrire de la manière suivante :

$$\eta = \frac{R_{rad}}{R_{rad}+R_{loss}} = \frac{R_{rad}}{R_A}$$

L'origine de la diminution de l'efficacité pour de faibles tailles d'antennes n'est pas due aux pertes par conduction et aux pertes diélectriques mais une résistance de rayonnement faible due à une énergie stockée autour de l'antenne.

Les systèmes de télécommunications émergents s'appuyant sur la radio intelligente sont de plus en plus répandus et un déploiement massif de ce type de systèmes est attendu dans les années à venir. Le bon fonctionnement de ces systèmes s'appuie entre autre sur une unité de sondage spectral. La conception d'antennes de réception pour ces systèmes de sondage spectral est difficile compte tenu des contraintes applicatives.

En effet, il est nécessaire que ces antennes électriquement petites fonctionnent à des fréquences relativement faibles (de l'ordre de 600-700 MHz) tout en gardant des dimensions et des performances raisonnables. Or, la miniaturisation d'une antenne passe nécessairement par des compromis sur les performances notamment en terme de bande passante et d'efficacité.

Il existe différentes antennes électriquement petites présentant des caractéristiques permettant d'améliorer leur efficacité. Il est notamment connu du document US 2009/0140946 une antenne électriquement petite munie d'une inclusion de type LC résonante en champ proche, c'est-à-dire à la fois électrique et magnétique puisqu'elle associe une inductance et une capacité. Cette inclusion dite inspirée de métamatériaux est appliquée sur de petites antennes tridimensionnelles électriques et magnétiques.

Cependant, le document se limite aux antennes élémentaires telles que les dipôles et boucles et leur bande passante finale est très faible.

Objet et résumé de l'invention

L'invention vise à résoudre ce problème particulier en proposant un procédé permettant d'améliorer l'efficacité d'une antenne électriquement petite quelconque à partir d'une liste d'inclusions en métamatériau.

Un objet de l'invention propose un procédé d'amélioration de l'efficacité d'une antenne électriquement petite, comprenant les étapes suivantes :

- une sélection d'une antenne,
- une alimentation de ladite antenne sélectionnée par un courant électrique,
- une quantification de l'énergie stockée dans l'antenne sélectionnée pour une fréquence d'émission donnée,
- une détermination de la nature de l'antenne en fonction de ladite quantification d'énergie stockée, ladite détermination comportant une comparaison de ladite quantité d'énergie stockée à un seuil d'énergie, l'antenne étant de nature électrique si l'énergie stockée quantifiée est inférieure au seuil d'énergie, et de nature magnétique sinon,

- un choix d'une inclusion en métamatériau à associer à l'antenne sélectionnée pour améliorer son efficacité, le choix étant réalisé dans une liste d'inclusions en fonction de la nature de l'antenne sélectionnée.

L'invention permet ainsi de sélectionner et d'associer une inclusion de métamatériau particulière à une antenne donnée pour améliorer son efficacité de rayonnement et donc son rendement.

Plus particulièrement, ladite quantité d'énergie stockée est comparée à un seuil d'énergie nulle. Ladite comparaison correspond donc à une détermination du signe de la valeur de la quantité d'énergie stockée.

L'énergie stockée dans l'antenne peut être calculée à partir de différentes méthodes comme par exemple la méthode décrite dans l'article « Calculation of small antennas quality factor using FDTD method » de Collardey et al. Publiée en 2006 dans la revue IEEE.

Le procédé selon l'invention permet, contrairement aux antennes améliorées connues, de considérer des antennes complexes utilisées au sein de dispositifs de télécommunication. L'intégration d'antenne au sein de châssis de téléphone, par exemple, nécessite l'utilisation d'antennes de géométrie particulièrement irrégulière.

L'analyse et la synthèse proposées au sein du procédé de l'invention peuvent être appliqué à un couple d'une antenne électriquement petite et d'une inclusion de métamatériau non canonique et quelconque, c'est-à-dire notamment de taille et de nature arbitraires. Le procédé donne de manière systématique des résultats en termes de couple d'une antenne avec une inclusion inspirée de métamatériau à associer afin d'améliorer l'efficacité de rayonnement.

Le procédé permet ainsi d'améliorer les performances d'une antenne par rapport à l'existant notamment en termes :

- d'efficacité de rayonnement,
- de largeur de bande (bande passante),
- de dimensions physiques et
- de stabilité du diagramme de rayonnement sur toute la bande de fréquence.

Selon un premier aspect du procédé d'amélioration de l'efficacité d'une antenne électriquement petite, la quantification de l'énergie stockée dans l'antenne sélectionnée comprend une décomposition en mode de courant de surface de l'antenne et une estimation de l'énergie stockée dans le mode dominant uniquement.

Le procédé s'appuie notamment sur une analyse basée sur la théorie des modes caractéristiques pour évaluer l'énergie stockée dans l'antenne sans inclusion pour chacun des modes de courant présents. Pour quantifier l'ordre de grandeur de l'énergie stockée dans l'antenne, on identifie le mode dominant, le mode dominant d'une antenne excitée par une alimentation électrique externe correspondant au mode auquel est associée la pondération modale la plus importante, puis on calcule le produit de la valeur propre du mode dominant avec le carré de la pondération associée.

Le procédé consiste premièrement en la définition de métriques adéquates pour l'analyse d'une antenne électriquement petite et de plusieurs inclusions à métamatériau. Deuxièmement, des critères sont proposés afin de s'assurer que l'association des deux structures permet une amélioration des performances de l'antenne électriquement petite en terme d'efficacité de rayonnement.

Dans une variante du procédé d'amélioration de l'efficacité d'une antenne électriquement petite, la quantification de l'énergie stockée dans l'antenne sélectionnée comprend une décomposition en mode d'excitation fréquentielle de l'antenne et une estimation de l'énergie stockée à partir de la somme des énergies stockées dans les différents modes. Généralement pour une antenne électriquement petite, le rayonnement est dû au mode dominant. Cependant pour une antenne plus complexe multi-mode, il devient nécessaire de considérer une somme des énergies stockées par mode.

Selon un deuxième aspect du procédé d'amélioration de l'efficacité d'une antenne électriquement petite, la liste des inclusions est préalablement formée à partir d'inclusions en métamatériau classées selon la nature de l'inclusion dans une première catégorie regroupant les inclusions électriques ou dans une seconde catégorie regroupant les inclusion magnétiques.

Selon un troisième aspect du procédé d'amélioration de l'efficacité d'une antenne électriquement petite, les inclusions sont en outre répertoriées à l'intérieure de chacune des première et seconde catégories en fonction de leur géométrie, et l'étape du choix de l'inclusion comprend en outre une définition de la géométrie de l'antenne, le choix étant réalisé en fonction de la géométrie de l'antenne sélectionné.

Le classement géométrique des inclusions à l'intérieur de chaque catégorie permet ainsi de réduire d'autant plus le nombre d'inclusions parmi lesquelles sélectionner l'inclusion permettant d'améliorer l'antenne sélectionnée.

Selon un quatrième aspect du procédé d'amélioration de l'efficacité d'une antenne électriquement petite, la nature des inclusions est préalablement déterminée à partir d'un calcul de valeurs propres de l'inclusion, l'inclusion possédant une nature magnétique si la valeur propre est positive et une nature électrique si elle est négative.

Le calcul des valeurs propres d'une inclusion peut être réalisé en fonction des fréquences d'émission des antennes.

Selon un cinquième aspect du procédé d'amélioration de l'efficacité d'une antenne électriquement petite, le choix d'une inclusion de métamatériau dans une liste d'inclusion comprend une définition de la géométrie de l'antenne est réalisé en outre en fonction de la géométrie de l'antenne.

Un autre objet de l'invention propose un système informatique comprenant des moyens configurés pour mettre en œuvre le procédé défini ci-dessus.

Il est en outre proposé dans un autre objet de l'invention, un produit programme d'ordinateur chargeable directement dans une mémoire d'un système informatique, comprenant des portions de code de logiciel pour l'exécution du procédé tel que défini ci-dessus lorsque ledit programme est exécuté sur ledit système informatique.

Encore un autre objet de l'invention propose un support lisible par un système informatique, ayant des instructions exécutables par ordinateur adaptées pour provoquer l'exécution par le système informatique du procédé tel que défini ci-dessus.

Brève description des dessins.

L'invention sera mieux comprise à la lecture faite ci-après, à titre indicatif mais non limitatif, en référence aux dessins annexés sur lesquels :

- la figure 1 présente un logigramme d'un procédé d'amélioration de l'efficacité d'une antenne électriquement petite selon un mode de mise en œuvre de l'invention ;
- la figure 2 représente un exemple d'antenne planaire sans l'inclusion ;
- les figures 3A et 3B présentent respectivement une vue de face et une vue en perspective d'une inclusion en métamatériau configurée pour coopérer avec l'antenne de la figure 2 ;
- la figure 4 illustre un exemple d'une antenne planaire améliorée par l'addition d'une inclusion en métamatériau ;
- les figures 5A à 5F présentent d'autres exemple de formes géométriques d'inclusions en métamatériau.

Description détaillée de modes de réalisation

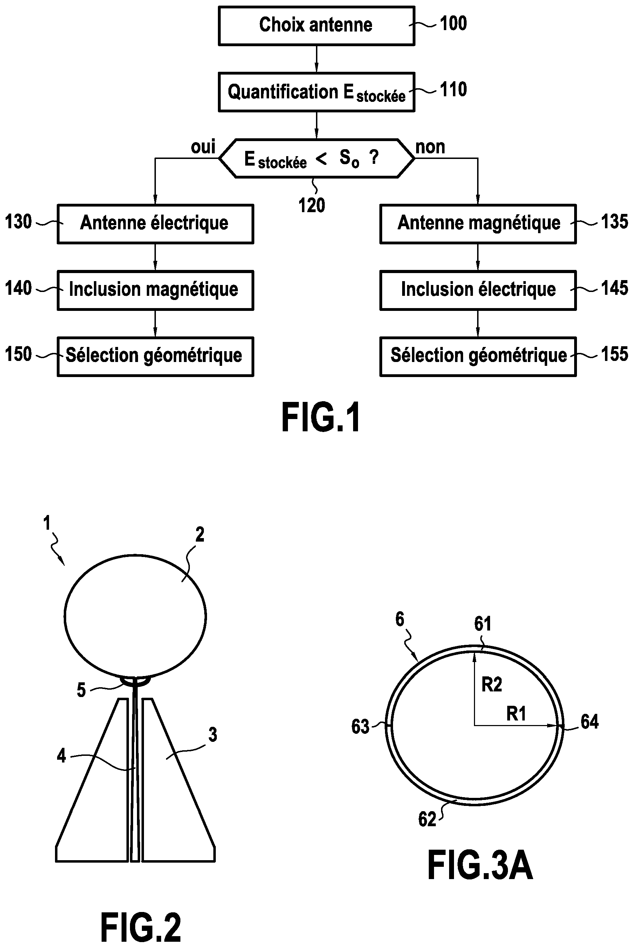

La figure 1 présente un logigramme d'un procédé d'amélioration de l'efficacité d'une antenne électriquement petite selon un mode de mise en œuvre de l'invention.

Dans une première étape 100 du procédé, une antenne électriquement petite à améliorer est sélectionnée. L'antenne électriquement petite peut être par exemple une antenne planaire comme celle illustrée sur la figure 2.

Sur la figure 2, l'antenne planaire 1 comprend une portion radiative 2 de forme elliptique permettant d'émettre des ondes sous une excitation électrique et un système d'alimentation 3 permettant d'acheminer un courant électrique d'excitation de la portion radiative 2, le courant étant notamment acheminé au travers d'un canal d'alimentation 4 dont l'extrémité couplée à la portion radiative 2 présente un trident d'alimentation 5 couplé à la portion radiative 2 en trois points distincts.

La forme elliptique de la portion radiative 2 permet de fournir un degré de liberté supplémentaire pour la correspondance de l'impédance lors de la quantification d'énergie. Le trident d'alimentation 5 est utilisé pour exciter la portion radiative 2 de l'antenne 1 en trois points équidistants de manière à augmenter le nombre de modes excités et réduire la fréquence de coupure des premiers modes.

Dans une seconde étape 110, on alimente l'antenne 1 sélectionnée et on quantifie l'énergie stockée dans l'antenne 1.

Pour quantifier l'énergie stockée, on détermine, à l'aide par exemple de la méthode des moments, une matrice d'impédance Z de la portion radiative 2 de l'antenne 1 en présence d'un champ électrique imposé par le système d'alimentation 3 et l'unité d'alimentation, non représentée, à laquelle il est raccordé. Puis, à partir de la théorie des modes caractéristiques, on détermine les courants modaux, c'est-à-dire les courants pour chaque mode propre de la structure antennaire. Les courants modaux correspondent aux valeurs propres de la structure, c'est-à-dire de l'antenne 1, lorsqu'elle est alimentée. Ce calcul est effectué sur la plage fréquentielle d'intérêt ou de fonctionnement de l'antenne 1, par exemple de 900 MHz à 1100 MHz.

On identifie ensuite le mode dominant et on calcule ensuite la puissance réactive totale du ou des mode(s) dominant(s), notamment à partir du produit de la valeur propre du mode dominant avec le carré de la pondération associée. La puissance réactive totale peut être définie par l'équation suivante :

$$P_{\mathrm{r}} = \sum_{n=1}^{N} P_{\mathrm{r,n}} = \sum_{n=1}^{N} |\alpha_n|^2 \lambda_n$$

où $P_r$ représente la puissance réactive totale, $n$ est l'indice modale, $\alpha_n$ est le coefficient de pondération du mode $n$, $\lambda_n$ est la valeur propre du mode $n$ et N est le nombre de modes dominants considéré.

Des exemples de méthode de quantification de l'énergie stockée dans une antenne électriquement petite sont définies dans l'article « New Metrics for artificial magnetism from metal-dielectric metamaterial based on the theory of characteristic modes » de M.H. Rabah et al. publié en 2015 dans la revue IEEE, et dans l'article « Calculation of small antennas quality factor using FDTD Method » de S. Collardey et al. publié en 2006 dans la revue IEEE.

Dans une troisième étape 120, on étudie le signe de l'énergie stockée calculée précédemment.

Si l'énergie stockée est négative, dans une étape suivante 130, la nature de l'antenne 1 est qualifiée d'électrique. Si au contraire l'énergie stockée est positive, dans une étape 135, la nature de l'antenne 1 est qualifiée de magnétique.

Si l'antenne 1 est de nature magnétique, à la suite de l'étape 135, on limite, dans une étape 145, le choix des inclusions parmi une liste d'inclusions en métamatériau à une première catégorie d'inclusions regroupant les inclusions électriques.

Si l'antenne 1 est de nature électrique, à la suite de l'étape 130, on limite, dans une étape 140, le choix des inclusions parmi une liste d'inclusions en métamatériau à une seconde catégorie d'inclusions regroupant les inclusions magnétiques.

Puis, dans une étape 150 succédant à l'étape 140 ou dans une étape 155 succédant à l'étape 145, on identifie la géométrie de l'antenne 1, et notamment de sa portion radiative 2, on définit un groupe géométrique d'inclusions utilisables et on réduit le nombre d'inclusions en métamatériau de la catégorie considérée pour définir l'inclusion électrique ou magnétique la plus adaptée à l'antenne 1 et ainsi optimiser l'amélioration de l'efficacité de l'antenne 1.

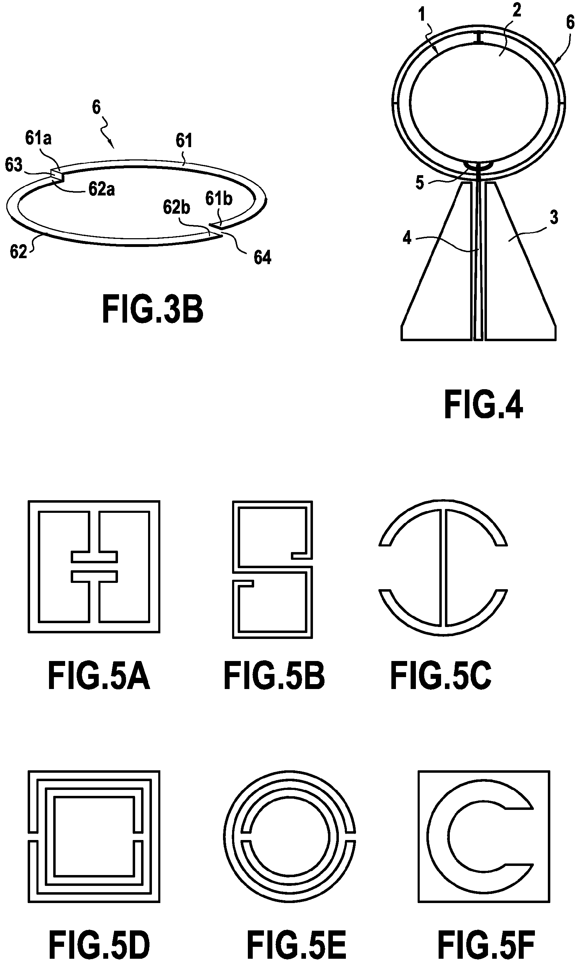

L'inclusion pour l'antenne planaire 1 peut par exemple correspondre à l'inclusion 6 illustrée sur les figures 3A et 3B. L'inclusion 6 en métamatériau possède une forme elliptique présentant un premier rayon R1 et un second rayon R2 comme cela est illustré sur la figure 3A.

De plus, pour pouvoir former une ellipse fermée, l'inclusion 6 présente une première demie ellipse 61 s'étendant dans un premier plan et une seconde demie ellipse 62 complémentaire de la première demie ellipse 61 et s'étendant dans un second plan distinct et parallèle du premier plan dans lequel s'étend la première demie ellipse 61, comme cela est illustré sur la figure 3B. La première et la seconde demies ellipses 61 et 62 sont couplée par un raccordement 63 formé entre une première extrémité de la première demie ellipse 61 disposée en vis-à-vis d'une première extrémité 62a de la seconde demie ellipse 62. Le seconde extrémité 61b de la première demie ellipse 61 et la seconde extrémité 62b de la seconde demie ellipse 62 disposée en regard l'une de l'autre et respectivement opposée à la première extrémité 61a de la première demie ellipse 61 et à la première extrémité 62a de la seconde demie ellipse 62 sont séparées par un espace 64.

Lorsque l'inclusion en métamatériau est réalisée sur un panneau, le raccordement 63 forme un via permettant de raccorder électriquement la première demie ellipse 61 formée sur une première face du plateau à la seconde demie ellipse 62 formée sur une seconde face du plateau opposée à la première face du plateau.

La figure 4 présente l'antenne planaire 1 de la figure 2 améliorée par l'addition de l'inclusion en métamatériau des figures 3A et 3B.

Les figures 5A à 5F présentent d'autres exemple de formes géométriques d'inclusions en métamatériau qui peuvent être utilisées pour d'autres formées géométriques d'antenne électriquement petites.

L'invention propose ainsi un procédé permettant d'améliorer l'efficacité d'une antenne électriquement petite quelconque à partir d'une série d'inclusions en métamatériau préalablement classées dans une liste en fonction de leur nature au moins.

**Revendications**

1. Procédé d'amélioration de l'efficacité d'une antenne électriquement petite (1), comprenant les étapes suivantes :

   - une sélection (100) d'une antenne,
   - une alimentation de ladite antenne (1) sélectionnée par un courant électrique,
   - une quantification (110) de l'énergie stockée dans l'antenne (1) sélectionnée pour une fréquence d'émission donnée,
   - une détermination de la nature de l'antenne (1) en fonction de ladite quantification d'énergie stockée, ladite détermination comportant une comparaison (120) de ladite quantité d'énergie stockée à un seuil d'énergie, l'antenne (1) étant de nature électrique (130) si l'énergie stockée quantifiée est inférieure au seuil d'énergie et de nature magnétique (135) sinon,
   - un choix d'une inclusion (2) en métamatériau à associer à l'antenne (1) sélectionnée pour améliorer son efficacité, le choix étant réalisé dans une liste d'inclusions en fonction de la nature de l'antenne sélectionnée (1).

**2.** Procédé selon la revendication 1, dans lequel la quantification de l'énergie stockée dans l'antenne sélectionnée (1) comprend une décomposition en modes de courants de surface de l'antenne (1) et une estimation de l'énergie stockée dans le mode dominant uniquement.

**3.** Procédé selon la revendication 1, dans lequel la quantification de l'énergie stockée dans l'antenne sélectionnée (1) comprend une décomposition en modes d'excitation fréquentielle de l'antenne (1) et une estimation de l'énergie stockée à partir de la somme des énergies stockées dans les différents modes.

**4.** Procédé selon l'une des revendications 1 à 3, dans lequel la liste des inclusions (2) est préalablement formée à partir d'inclusions en métamatériau classées selon la nature de l'inclusion dans une première catégorie regroupant les inclusions électriques ou dans une seconde catégorie regroupant les inclusions magnétiques.

**5.** Procédé selon la revendication 4, dans lequel la nature des inclusions (2) est préalablement déterminée à partir d'un calcul de valeurs propres de l'inclusion, l'inclusion possédant une nature magnétique si la valeur propre est positive et une nature électrique si elle est négative.

**6.** Procédé selon l'une des revendications 4 ou 5, dans lequel les inclusions sont en outre répertoriées à l'intérieure de chacune des première et seconde catégories en fonction de leur géométrie, et l'étape du choix de l'inclusion comprend en outre une définition de la géométrie de l'antenne, le choix étant réalisé en outre en fonction de la géométrie de l'antenne sélectionné.

**7.** Procédé selon la revendication 6, dans lequel le choix d'une inclusion de métamatériau dans une liste d'inclusion comprenant une définition de la géométrie de l'antenne (1) est réalisé en outre en fonction de la géométrie de l'antenne.

**8.** Système informatique comprenant des moyens configurés pour mettre en œuvre le procédé selon l'une des revendications 1 à 7.

**9.** Produit programme d'ordinateur chargeable directement dans une mémoire d'un système informatique, comprenant des portions de code de logiciel pour l'exécution du procédé selon l'une des revendications 1 à 7 lorsque ledit programme est exécuté sur ledit système informatique.

**10.** Support lisible par un système informatique, ayant des instructions exécutables par ordinateur adaptées pour provoquer l'exécution par le système informatique du procédé selon l'une des revendications 1 à 7.

**Patentansprüche**

**1.** Verfahren zur Verbesserung der Effizienz einer elektrisch kurzen Antenne (1), das die folgenden Schritte umfasst:

- Auswählen (100) einer Antenne,
- Versorgen der ausgewählten Antenne (1) mit elektrischem Strom,
- Quantifizieren (110) der in der ausgewählten Antenne (1) gespeicherten Energie für eine gegebene Sendefrequenz,
- Bestimmen der Art der Antenne (1) in Abhängigkeit von dem Quantifizieren der gespeicherten Energie, wobei das Bestimmen einen Vergleich (120) der Menge der gespeicherten Energie mit einem Energieschwellenwert beinhaltet und die Antenne (1), wenn die quantifizierte gespeicherte Energie niedriger als der Energieschwellenwert ist, elektrischer Art (130) und ansonsten magnetischer Art (135) ist,
- Wählen eines Einschlusses (2) aus Metamaterial, der mit der ausgewählten Antenne (1) zu verbinden ist, um ihre Effizienz zu verbessern, wobei das Wählen in einer Liste von Einschlüssen in Abhängigkeit von der Art der ausgewählten Antenne (1) ausgeführt wird.

**2.** Verfahren nach Anspruch 1, wobei das Quantifizieren der in der ausgewählten Antenne (1) gespeicherten Energie ein Zerlegen in Oberflächenstrommodi der Antenne (1) und ein Schätzen der einzig in dem vorherrschenden Modus gespeicherten Energie umfasst.

**3.** Verfahren nach Anspruch 1, wobei das Quantifizieren der in der ausgewählten Antenne (1) gespeicherten Energie ein Zerlegen in Frequenzerregungsmodi der Antenne (1) und ein Schätzen der gespeicherten Energie ausgehend von der Summe der in den verschiedenen Modi gespeicherten Energien umfasst.

**4.** Verfahren nach einem der Ansprüche 1 bis 3, wobei die Liste der Einschlüsse (2) im Voraus ausgehend von Einschlüssen aus Metamaterial gebildet wird, die gemäß der Art des Einschlusses in eine erste Kategorie, welche die elektrischen Einschlüsse zusammenfasst, oder in eine zweite Kategorie eingestuft werden, welche die magnetischen Einschlüsse zusammenfasst.

**5.** Verfahren nach Anspruch 4, wobei die Art der Einschlüsse (2) im Voraus ausgehend von einer Berechnung von Eigenwerten des Einschlusses bestimmt wird, wobei der Einschluss eine magnetische Art, wenn der Eigenwert positiv ist, und eine elektrische Art besitzt, wenn er negativ ist.

**6.** Verfahren nach einem der Ansprüche 4 oder 5, wobei die Einschlüsse ferner innerhalb von jeder von der ersten und zweiten Kategorie in Abhängigkeit von ihrer Geometrie verzeichnet sind und der Schritt des Wählens des Einschlusses ferner ein Definieren der Geometrie der Antenne umfasst, wobei das Wählen ferner in Abhängigkeit von der Geometrie der ausgewählten Antenne ausgeführt wird.

**7.** Verfahren nach Anspruch 6, wobei das Wählen eines Einschlusses aus Metamaterial in einer Einschlussliste, das ein Definieren der Geometrie der Antenne (1) umfasst, ferner in Abhängigkeit von der Geometrie der Antenne ausgeführt wird.

**8.** Datenverarbeitungssystem, das Mittel umfasst, die dazu ausgestaltet sind, das Verfahren nach einem der Ansprüche 1 bis 7 durchzuführen.

**9.** Computerprogrammprodukt, das direkt in einen Speicher eines Datenverarbeitungssystems ladbar ist, das Software-Codeabschnitte für die Ausführung des Verfahrens nach einem der Ansprüche 1 bis 7 umfasst, wenn das Programm auf dem Datenverarbeitungssystem ausgeführt wird.

**10.** Datenträger, der durch ein Datenverarbeitungssystem lesbar ist und der durch einen Computer ausführbare Befehle aufweist, die dazu geeignet sind, die Ausführung des Verfahrens nach einem der Ansprüche 1 bis 7 durch das Datenverarbeitungssystem zu bewirken.


**Claims**

**1.** A method of improving the efficiency of an electrically small antenna (1), the method comprising the following steps:

• selecting (100) an antenna;
• electrically feeding said selected antenna (1);
• quantifying (110) the energy stored in the selected antenna (1) at a given transmission frequency;
• determining the nature of the antenna (1) as a function of the quantified stored energy, this determination comprising comparing (120) said quantity of stored energy with an energy threshold, the antenna (1) being of electric nature (130) if the quantified stored energy is below the energy threshold, and otherwise being of magnetic nature (135); and
• selecting a metamaterial inclusion (2) for associating with the selected antenna (1) in order to improve its efficiency, the selection being made from a list of inclusions as a function of the nature of the selected antenna (1).

**2.** A method according to claim 1, wherein quantifying the energy stored in the selected antenna (1) comprises decomposing the antenna (1) into surface current modes and estimating the stored energy in the dominant mode only.

**3.** A method according to claim 1, wherein quantifying the energy stored in the selected antenna (1) comprises decomposing the antenna (1) into frequency excitation modes and estimating the stored energy from the sum of the energies stored in the various modes.

**4.** A method according to any one of claims 1 to 3, wherein the list of inclusions (2) is previously formed from metamaterial inclusions classified depending on the natures of the inclusions into a first category comprising electric inclusions or into a second category comprising magnetic inclusions.

**5.** A method according to claim 4, wherein the nature of the inclusions (2) is previously determined by calculating eigenvalues of the inclusions, an inclusion possessing a magnetic nature if its eigenvalue is positive and an electric nature if it is negative.

6. A method according to claim 4 or claim 5, wherein the inclusions are also listed within each of the first and second categories as a function of their geometrical shapes, and the step of selecting the inclusion further comprises defining the geometrical shape of the antenna, the selection also being made as a function of the geometrical shape of the selected antenna.

7. A method according to claim 6, wherein selecting a metamaterial inclusion from a list of inclusions includes defining the geometrical shape of the antenna (1), with the selection also being made as a function of the geometrical shape of the antenna.

8. A computer system comprising means configured to perform the method according to any one of claims 1 to 7.

9. A computer program product that is directly loadable into a memory of a computer system, the product including software code portions for executing the method according to any one of claims 1 to 7 when said program is executed on said computer system.

10. A medium readable by a computer system having computer-executable instructions adapted to cause the computer system to execute the method according to any one of claims 1 to 7.

Choix antenne ~100

Quantification $E_{stockée}$ ~110

oui ← $E_{stockée} < S_0$ ? → non
120

130 ~ Antenne électrique

135 ~ Antenne magnétique

140 ~ Inclusion magnétique

145 ~ Inclusion électrique

150 ~ Sélection géométrique

155 ~ Sélection géométrique

**FIG.1**

1

2

5

4

3

**FIG.2**

6

61

R2

R1

63

64

62

**FIG.3A**

**FIG.3B**

**FIG.4**

**FIG.5A**

**FIG.5B**

**FIG.5C**

**FIG.5D**

**FIG.5E**

**FIG.5F**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20090140946 A

**Littérature non-brevet citée dans la description**

- **COLLARDEY et al.** Calculation of small antennas quality factor using FDTD method. *revue IEEE.,* 2006
- **M.H. RABAH et al.** New Metrics for artificial magnetism from metal-dielectric metamaterial based on the theory of characteristic modes. *revue IEEE,* 2015
- **S. COLLARDEY et al.** Calculation of small antennas quality factor using FDTD Method. *revue IEEE.,* 2006